# EUROPEAN PATENT APPLICATION

(11) **EP 4 468 543 A1**
(43) Date of publication of application: **27.11.2024**
(21) Application number: 22921500.9
(22) Date of filing: 09.09.2022
(51) Int. Cl.: H02J 1/08

(54) **POWER SUPPLY CIRCUIT AND POWER SUPPLY APPARATUS**

(30) Priority: 20.01.2022 CN 202210066078
(71) Applicant: Shenzhen Pulsecare Medical Technology Co., Ltd., Shenzhen, Guangdong 518000 (CN)
(72) Inventor: TAN, Jianwen, Shenzhen, Guangdong 518000 (CN)
(74) Representative: Petraz, Gilberto Luigi
(86) International application number: PCT/CN2022/118159
(87) International publication number: WO 2023/138072

(57) **Abstract**

The present application relates to a power supply circuit and a power supply device, and the power supply circuit includes an input circuit (100) configured to modulate an input voltage into a first working voltage and a second working voltage, and output the first working voltage and the second working voltage; a low voltage circuit (200) connected to the input circuit, and configured to generate a first output voltage based on the first working voltage and output the first output voltage; a high voltage circuit (300) connected to the input circuit, and configured to generate a second output voltage based on the second working voltage and output the second output voltage; an isolation circuit (400) connected to the high voltage circuit and the low voltage circuit, and configured to output the first output voltage, and configured to isolate the low voltage circuit from the second output voltage higher than a preset isolation voltage according to the preset isolation voltage when the high voltage circuit outputs the second output voltage; and a control circuit (500) connected to the high voltage circuit and the low voltage circuit, and configured to respectively control the high voltage circuit and the low voltage circuit to generate the first output voltage and the second output voltage. The present application can avoid damaging the low voltage circuit with the second output voltage, and also achieve seamless switching of the output of the power supply circuit from the first output voltage to the second output voltage.

## Description

The present application claims priority of a Chinese patent application, with application No. 202210066078.8, filed on January 20, 2022 to CNIPA, entitled "power supply circuit and power supply device"; the contents of which are incorporated herein by reference.

### TECHNICAL FIELD

The present application relates to the technical field of power supply circuit, and more specifically to a power supply circuit and a power supply device.

### BACKGROUND

Currently, traditional power supplies are devices (or systems) that provide electrical energy to circuits or electronic and electrical equipment. According to the different forms of electrical energies output by power supplies, it can generally be divided into DC power supplies and AC power supplies. According to the different output voltage levels, it can generally be divided into low voltage power supplies and high voltage power supplies. According to different application fields (or electrical equipment), it can also be divided into communication power supplies, aviation power supplies, military special power supplies, etc.

For AC power supplies, the waveform of output voltage or output current is generally a positive negative alternating sine wave, and the application of high frequency AC power supplies (also known as high-frequency inverter power supplies) is becoming increasingly widespread. The output of traditional high frequency AC power supplies is a high frequency sine wave, which generally has two types including a switching mode or a linear amplification mode. The operating bandwidth of linear amplification mode is relatively wide, but the operating efficiency is often low; the switching mode uses an inverter circuit and a power electronic switching device, which have high operating efficiency.

In addition to high frequency AC power supplies that output sine waves, another type of high frequency AC power supply that can output square waves has also been increasingly valued in recent years, especially high voltage pulse power supplies that output high voltage square waves. The high voltage square wave pulse power supply is essentially a high frequency AC power supply, but its output waveform is square wave or pulse voltage, and the output voltage is often required to be relatively high. Due to different technological implementation paths, it is difficult to simultaneously generate sine waves and high voltage square waves in the same circuit or system.

The existing system scheme adopts two types of power supplies to achieve output in different waveform energy forms through integration and communication control. However, this implementation scheme is a system integration scheme, where the power supplies are independent systems with independent controllers; and a system level main controller is required to achieve communication between the main controller and two power supplies. In addition to problems such as complex system composition, large volume, and high cost, the output switching of the two forms of energy is generally achieved through a relay, which leads to problems such as long switching time and inflexible control

### SUMMARY

### TECHNICAL PROBLEM

Objects of the present application is to provide a power supply circuit and a power supply device, which aims to solve the problems of high cost and inconvenient signal switching in traditional power supplies that can output multiple waveforms.

### TECHNICAL SOLUTION OF THE PROBLEM

### TECHNICAL SOLUTION

In order to achieve above objection, in accordance to a first aspect of the present application, a power supply circuit is provided, which includes an input circuit, a low voltage circuit, a high voltage circuit, an isolation circuit, and a control circuit; the input circuit is configured to modulate an input voltage into a first working voltage and a second working voltage, and output the first working voltage and the second working voltage; the low voltage circuit is connected to the input circuit, and configured to generate a first output voltage based on the first working voltage and output the first output voltage; the high voltage circuit is connected to the input circuit, and configured to generate a second output voltage based on the second working voltage and output the second output voltage; the isolation circuit is connected to the high voltage circuit and the low voltage circuit, and configured to output the first output voltage, and configured to isolate the low voltage circuit from the second output voltage higher than a preset isolation voltage according to the preset isolation voltage when the high voltage circuit outputs the second output voltage; and the control circuit is connected to the high voltage circuit and the low voltage circuit, and configured to respectively control the high voltage circuit and the low voltage circuit to generate the second output voltage and the first output voltage.

In an embodiment, the low voltage circuit includes a resonant module, and the resonant module includes a first switching transistor, a second switching transistor, and a resonant unit; a first conducting terminal of the first switching transistor is connected to the input circuit to receive the first working voltage, a controlled terminal of the first switching transistor is connected to the control circuit, a second conducting terminal of the first switching transistor is connected to the first conducting terminal of the second switching transistor and connected to the resonant module, a controlled terminal of the second switching transistor is connected to the control circuit, and a second conducting terminal of the second switching transistor is connected to a ground terminal; and an output terminal of the resonant unit is connected to the isolation circuit and configured to output a resonant voltage.

In an embodiment, the low voltage circuit further includes a reference voltage module, and the reference voltage module includes a third switching transistor and a fourth switching transistor; a first conducting terminal of the third switching transistor is connected to the input circuit to receive the first working voltage, a controlled terminal of the third switching transistor is connected to the control circuit, a second conducting terminal of the third switching transistor is connected to a first conducting terminal of the fourth switching transistor and connected to the isolation circuit, a controlled terminal of the fourth switching transistor is connected to the control circuit, and a second conducting terminal of the fourth switching transistor is connected to the ground terminal; and the reference voltage module is configured to output a differential mode reference voltage, the differential mode reference voltage is configured to be combined with the resonant voltage to generate a differential mode sine voltage, and the differential mode sine voltage is the first output voltage.

In an embodiment, the high voltage circuit includes a first switching module, a second switching module, a third switching module, and a fourth switching module; a first terminal of the first switching module is connected to the input circuit to receive the second working voltage, a second terminal of the first switching module is connected to a first terminal of the second switching module and connected to the isolation circuit, and a second terminal of the second switching module is connected to the ground terminal; a first terminal of the third switching module is connected to the input circuit to receive the second working voltage, a second terminal of the third switching module is connected to a first terminal of the fourth switching module and connected to the isolation circuit, and a second terminal of the fourth switching module is connected to the ground terminal; and the high voltage circuit is configured to output a differential mode square wave voltage, and the differential mode square wave voltage is the second output voltage.

In an embodiment, the isolation circuit includes a first isolation module and a second isolation module; a voltage input terminal of the first isolation module is connected to the resonant module, a voltage input terminal of the second isolation module is connected to the reference voltage module, and both the voltage output terminal of the first isolation module and the voltage output terminal of the second isolation module are connected to the high voltage circuit.

In an embodiment, the first isolation module includes a first divider resistor, a second divider resistor, a first unidirectional conductor, a second unidirectional conductor, a third unidirectional conductor, and a fourth unidirectional conductor; a first terminal of the first divider resistor is connected to a protective voltage terminal, the protective voltage terminal is configured to output a protective voltage corresponding to the preset isolation voltage, a second terminal of the first divider resistor is respectively connected to a positive pole of the first unidirectional conductor and a positive pole of the third unidirectional conductor, a negative pole of the first unidirectional conductor is connected to a positive pole of the second unidirectional conductor and connected to the resonant module, a negative pole of the second unidirectional conductor is connected to a first terminal of the second divider resistor, a negative pole of the third unidirectional conductor is connected to a positive pole of the fourth unidirectional conductor and connected to the high voltage circuit, a negative pole of the fourth unidirectional conductor is connected to a first terminal of the second divider resistor, and a second terminal of the second divider resistor is connected to the ground terminal; and a structure of the second isolation module is the same as that of the first isolation module; the first isolation module is configured to output the resonant voltage and isolate the resonant module from the high voltage circuit, and the second isolation module is configured to output the differential mode reference voltage and isolate the reference voltage module from the high voltage circuit.

In an embodiment, the control circuit includes a control unit and at least one optocoupler, the control unit is connected to the high voltage circuit and the low voltage circuit respectively through the at least one optocoupler, to control to generate the second output voltage and the first output voltage.

In an embodiment, the input circuit includes a rectification module, and a first voltage regulation module connected to the rectification module, and a second voltage regulation module connected to the rectification module; the rectification module is configured to rectify the input voltage into an input direct current voltage, the first voltage regulation module is configured to convert the input direct current voltage into the first working voltage, and the second voltage regulation module is configured to convert the input direct current voltage into the second working voltage.

In an embodiment, the control unit is respectively connected to the first voltage regulation module, the second voltage regulation module, and the isolation circuit, and the control unit is configured to configure the first working voltage, the second working voltage, and the preset isolation voltage.

In accordance to a second aspect of the present application, a power supply device is provided, which includes the power supply circuit mentioned above.

### BENEFICAL EFFECTS OF INVENTION

### BENEFICAL EFFECTS

The beneficial effect of the power supply circuit and the power supply device provided in the present application is that the low voltage circuit in the power supply circuit can output the first output voltage through the isolation circuit; when the second output voltage is outputted, the isolation circuit can isolate the second output voltage higher than the preset isolation voltage from the low voltage circuit according to the preset isolation voltage, so as to avoid damage to the low voltage circuit by the second output voltage. At the same time, it also achieves seamless switching of the output of the power supply circuit from the first output voltage to the second output voltage.

### BRIEF DESCRIPTION OF THE DRAWINGS

### DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1 is a schematic block diagram of a power supply circuit provided in a first embodiment of the present application;
FIG. 2 is a schematic circuit diagram of a low voltage circuit shown in FIG. 1;
FIG. 3 is a schematic circuit diagram of a high voltage circuit shown in FIG. 1;
FIG. 4 is another schematic circuit diagram of a high voltage circuit shown in FIG. 1;
FIG. 5 is a schematic circuit diagram of an isolation circuit shown in FIG. 1; and
FIG. 6 is another schematic circuit diagram of a power supply circuit provided in a first embodiment of the present application.

In the drawings, the reference signs are listed as follows:
100-input circuit; 110-rectification module; 120-first voltage regulation module; 130-second voltage regulation module; 200-low voltage circuit; 210-resonant module; 211-resonant unit; 220-reference voltage module; 300-high voltage circuit; 310-first switching module; 320-second switching module; 330-third switching module; 340fourth switching module; 400-isolation circuit; 410-first isolation module; 411-first unidirectional conductor; 412-second unidirectional conductor; 413-third unidirectional conductor; 414-fourth unidirectional conductor; 420-second isolation module; and 500-control circuit.

### DESCRIPTION OF EMBODIMENTS

### DETAILED DESCRIPTION OF EMBODIMENTS

In order to make the purpose, the technical solution and the advantages of the present application be clearer and more understandable, the present application will be further described in detail below with reference to accompanying figures and embodiments. It should be understood that the specific embodiments described herein are merely intended to illustrate but not to limit the present application.

It is noted that when a component is referred to as being "fixed to" or "disposed on" another component, it can be directly or indirectly on another component. When a component is referred to as being "connected to" another component, it can be directly or indirectly connected to another component.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly include one or more such technical feature(s). In the description of the present application, "a plurality of" means two or more, unless there is additional explicit and specific limitation.

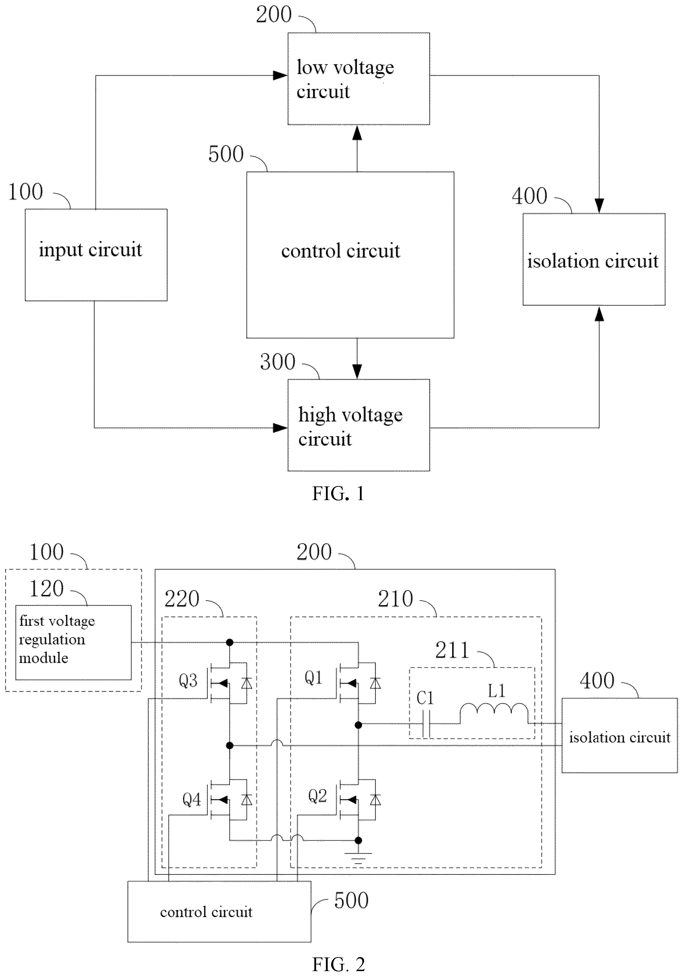

FIG. 1 shows the schematic block diagram of a power supply circuit provided in a first embodiment of the present application. For ease of explanation, only the relevant parts of the embodiment are shown, as detailed below:

A power circuit includes an input circuit 100, a low voltage circuit 200, a high voltage circuit 300, an isolation circuit 400, and a control circuit 500. The input circuit 100 is configured to modulate the input voltage into the first working voltage and the second working voltage and output the first working voltage and the second working voltage. The low voltage circuit 200 is connected to the input circuit 100, and the low voltage circuit 200 is configured to generate a first output voltage based on the first working voltage and output the first output voltage. The high voltage circuit 300 is connected to the input circuit 100, and the high voltage circuit 300 is configured to generate a second output voltage based on the second working voltage and output the second output voltage. The isolation circuit 400 is connected to the high voltage circuit 300 and the low voltage circuit 200. The isolation circuit 400 is configured to output the first output voltage, and is configured to isolate the low voltage circuit 200 from the second output voltage higher than the preset isolation voltage according to the preset isolation voltage when the high voltage circuit 300 outputs the second output voltage. The control circuit 500 is connected to the high voltage circuit 300 and the low voltage circuit 200, and is configured to control the high voltage circuit 300 and the low voltage circuit 200 to generate a second output voltage and a first output voltage, respectively. The preset isolation voltage is greater than the first output voltage and less than the second output voltage.

It should be noted that the second working voltage is much greater than the first working voltage, and the second output voltage is much greater than the first output voltage. When the first output voltage is outputted, if it is necessary to switch to output the second output voltage, the conventional circuit requires a longer switching time and it is difficult to achieve seamless switching. The isolation circuit 400 of the embodiment can receive the second output voltage when switching from the first output voltage to the second output voltage, and isolate the second output voltage greater than the preset isolation voltage from the low voltage circuit 200, so as to avoid the transmission of the second output voltage into the low voltage circuit 200. At the same time, it can also achieve seamless switching from the first output voltage to the second output voltage without considering whether the low voltage circuit 200 is turned off.

As shown in FIG. 2, in the embodiment, the low voltage circuit 200 includes a resonant module 210, the resonant module 210 includes a first switching transistor Q1, a second switching transistor Q2, and a resonant unit 211. The first conducting terminal of the first switching transistor Q1 is connected to the input circuit 100 to receive the first working voltage. The controlled terminal of the first switching transistor Q1 is connected to the control circuit 500. The second conducting terminal of the first switching transistor Q1 is connected to the first conducting terminal of the second switching transistor Q2 and connected to the resonant module 210. The controlled terminal of the second switching transistor Q2 is connected to the control circuit 500, and the second conducting terminal of the second switching transistor Q2 is connected to the ground terminal; the output terminal of the resonant unit 211 is connected to an isolation circuit 400 for outputting resonant voltage; and the first output voltage includes the resonant voltage. By controlling the turning on/off of the first switching transistor Q1 and the second switching transistor Q2, a resonant voltage with oscillation can be outputted. Specifically, the resonant unit 211 includes a resonant capacitor C1 and a resonant inductor L1. The first terminal of the resonant capacitor C1 is connected to the second conducting terminal of the first switching transistor Q1, the second terminal of the resonant capacitor C1 is connected to the first terminal of the resonant inductor L1, and the second section of the resonant inductor L1 is connected to the isolation circuit 400.

As shown in FIG. 2, in the embodiment, the low voltage circuit 200 further includes a reference voltage module 220, the reference voltage module 220 includes a third switching transistor Q3 and a fourth switching transistor Q4. The first conducting terminal of the third switching transistor Q3 is connected to the input circuit 100 to receive the first working voltage, the controlled terminal of the third switching transistor Q3 is connected to the control circuit 500, the second conducting terminal of the third switching transistor Q3 is connected to the first conducting terminal of the fourth switching transistor Q4 and connected to the isolation circuit 400, the controlled terminal of the fourth switching transistor Q4 is connected to the control circuit 500, and the second conducting terminal of the fourth switching transistor Q4 is connected to the ground terminal; the reference voltage module 220 is configured to output a differential mode reference voltage, the differential mode reference voltage is combined with the resonant voltage to generate a differential mode sine voltage. The differential mode sine voltage is the first output voltage. The resonant voltage and the differential mode reference voltage are both lower than the preset isolation voltage.

In the embodiment, the first switching transistor Q1, the second switching transistor Q2, the third switching transistor Q3, and the fourth switching transistor Q4 are all MOS transistors. Specifically, the first switching transistor Q1, the second switching transistor Q2, the third switching transistor Q3, and the fourth switching transistor Q4 can all be NMOS transistors. The first conducting terminals of the first switching transistor Q1, the second switching transistor Q2, the third switching transistor Q3, and the fourth switching transistor Q4 correspond to the drain of the NMOS transistor, and the second conducting terminals of the first switching transistor Q1, the second switching transistor Q2, the third switching transistor Q3, and the fourth switching transistor Q4 correspond to the source of the NMOS transistor. The controlled terminals of the first switching transistor Q1, the second switching transistor Q2, the third switching transistor Q3, and the fourth switching transistor Q4 correspond to the gate of the NMOS transistor.

It should be noted that the differential reference voltage is generated through the reference voltage module 220, the differential reference voltage can be combined with the resonant voltage to generate a differential more sin voltage with positive and negative phases. Specifically, when the first switching transistor Q1 and the fourth switching transistor Q4 are turned on, and the second switching transistor Q2 and the third switching transistor Q3 are turned off under the controlling of the control circuit 500, the low voltage circuit 200 outputs a positive phase differential more sin voltage; when the first switching transistor Q1 is turned on and the fourth switching transistor Q4 is turned off, and the second switching transistor Q2 and the third switching transistor Q3 are turned on, a negative phase differential mode sine voltage is output.

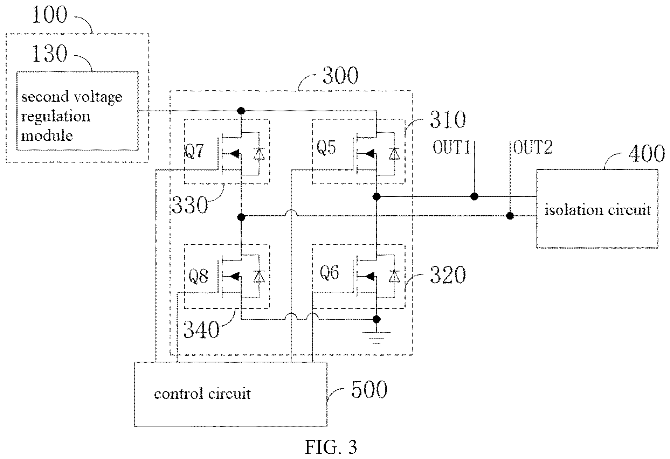

As shown in FIG. 3, in the embodiment, the high voltage circuit 300 includes a first switching module 310, a second switching module 320, a third switching module 330, and a fourth switching module 340; the first terminal of the first switching module 310 is connected to the input circuit 100 to receive the second working voltage. The second terminal of the first switching module 310 is connected to the first terminal of the second switching module 320 and connected to the first output terminal OUT1 of the isolation circuit 400, the second terminal of the second switching module 320 is connected to the ground terminal; the first terminal of the third switching module 330 is connected to the input circuit 100 to receive the second working voltage. The second terminal of the third switching module 330 is connected to the first terminal of the fourth switching module 340 and connected to the second output terminal OUT2 of the isolation circuit 400, the second terminal of the fourth switching module 340 is connected to the ground terminal, and the high voltage circuit 300 is configured to output differential mode square wave voltage.

When the first switching module 310 and the fourth switching module 340 are turned on, and the second switching module 320 and the third switching module 330 are turned off under the controlling of the control circuit 500, the high voltage circuit 300 outputs a high level differential mode square wave voltage; when the first switching module 310 and the fourth switching module 340 are turned off, and the second switching module 320 and the third switching module 330 are turned on, the high voltage circuit 300 outputs a low level differential mode square wave voltage, and the differential mode square wave voltage is the second output voltage.

The first switching module 310, the second switching module 320, the third switching module 330, and the fourth switching module 340 are all MOS transistors. Specifically, the first switching module 310, the second switching module 320, the third switching module 330, and the fourth switching module 340 can all be NMOS transistors. The first conducting terminals of the first switching module 310, the second switching module 320, the third switching module 330, and the fourth switching module 340 correspond to the drain of the NMOS transistor. The second conducting terminals of the first switching module 310, the second switching module 320, the third switching module 330, and the fourth switching module 340 correspond to the source of the NMOS transistor, and the controlled terminals of the first switching module 310, the second switching module 320, the third switching module 330, and the fourth switching module 340 correspond to the gate of the NMOS transistor.

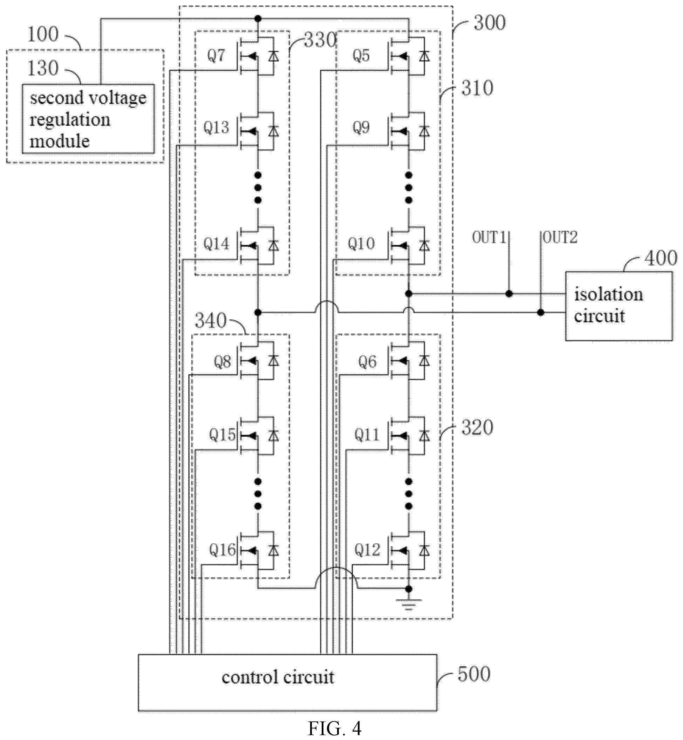

As shown in FIG. 4, the first switching module 310, the second switching module 320, the third switching module 330, and the fourth switching module 340 can all include a plurality of MOS transistors that are sequentially connected for voltage sharing.

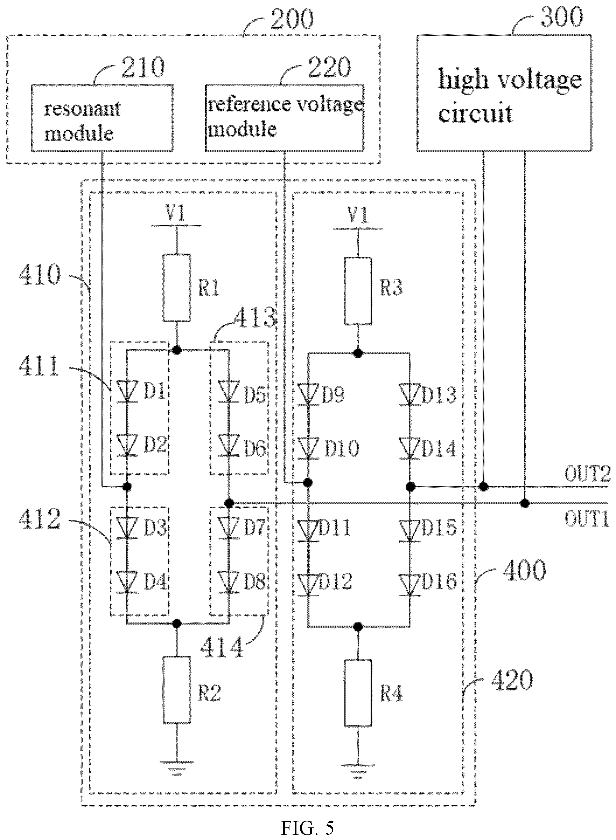

As shown in FIG. 5, in the embodiment, the isolation circuit 400 includes a first isolation module 410 and a second isolation module 420. The voltage input terminal of the first isolation module 410 and the voltage input terminal of the second isolation module 420 are both connected to the low voltage circuit 200, and the voltage output terminal of the first isolation module 410 and the voltage output terminal of the second isolation module 420 are both connected to the high voltage circuit 300.

The first isolation module 410 includes a first divider resistor R1, a second divider resistor R2, a first unidirectional conductor 411, a second unidirectional conductor 412, a third unidirectional conductor 413, and a fourth unidirectional conductor 414; the first terminal of the first divider resistor R1 is connected to a protective voltage terminal V1, the protective voltage terminal V1 is used to output a protective voltage corresponding to the preset isolation voltage. The second terminal of the first divider resistor R1 is respectively connected to the positive pole of the first unidirectional conductor 411 and the positive pole of the third unidirectional conductor 413. The negative pole of the first unidirectional conductor 411 is connected to the positive pole of the second unidirectional conductor 412 and connected to the resonant module 210. The negative pole of the second unidirectional conductor 412 is connected to the first terminal of the second divider resistor R2. The negative pole of the third unidirectional conductor 413 is connected to the positive pole of the fourth unidirectional conductor 414 and connected to the high voltage circuit 300. The negative pole of the fourth unidirectional conductor 414 is connected to the first terminal of the second divider resistor R2, and the second terminal of the second divider resistor R2 is connected to the ground terminal. The negative pole of the first unidirectional conductor 411 is the voltage input terminal of the first isolation module 410, and the negative pole of the third unidirectional conductor 413 is the voltage output terminal of the first isolation module 410 (the first output terminal OUT1 of the isolation circuit 400).

As shown in FIGS. 3 to 5, the structure of the second isolation module 420 is the same as that of the first isolation module 410 and is arranged between the reference voltage module 220 and the second terminal of the third switching module 330 of the high voltage circuit 300. The voltage output terminal of the second isolation module 420 (the second output terminal OUT2 of the isolation circuit 400) is connected to the second terminal of the third switching module 330 of the high voltage circuit 300. The voltage output terminal of the first isolation module 410 is configured to output the resonant voltage, the first isolation module 410 is configured to isolate the resonant module 210 from the high voltage circuit 300, the voltage output terminal of the second isolation module 420 is configured to output the differential mode reference voltage, and the second isolation module 420 is configured to isolate the reference voltage module 220 from the high voltage circuit 300.

Specifically, the first unidirectional conductor 411, the second unidirectional conductor 412, the third unidirectional conductor 413, and the fourth unidirectional conductor 414 can all be a diode or a plurality of diodes connected end-to-end. In the embodiment, each unidirectional conductor includes two diodes connected end-to-end. In the embodiment, the resistance values of the first divider resistor R1 and the second divider resistor R2 are equal, so that the preset isolation voltage is half of the protection voltage. When the ratio of the resistance values of the first divider resistor R1 and the second divider resistor R2 changes, the relationship between the preset isolation voltage and the protection voltage changes accordingly.

It should be noted that, taking the first isolation module 410 as an example, in the embodiment, if the protection voltage is 500V, the preset isolation voltage of the voltage input terminal of the first isolation module 410 and the voltage output terminal of the first isolation module 410 are both 250V through the voltage division of the first divider resistor R1 and the second divider resistor R2. When the resonant voltage is transmitted to the first isolation module 410, the voltage input terminal of the first isolation module 410 will be pulled down to the corresponding resonant voltage. At this time, the second unidirectional conductor 412 is turned on, and the voltage of the first terminal of the second divider resistor R2 will also be pulled down to the resonant voltage. At the same time, the fourth unidirectional conductor 414 will also be in a conductive state to convert the voltage output terminal of the first isolation module 410 into a resonant voltage, so as to achieve lossless output of the resonant voltage. If the high amplitude voltage output from the second terminal of the first switching module 310 is transmitted to the first isolation module 410 at this time, the voltage at the first terminal of the first divider resistor R1 is increased through the fourth unidirectional conductor 414. At this time, the negative voltage of the second unidirectional conductor 412 is greater than the positive voltage of the second unidirectional conductor 412, such that the second unidirectional conductor 412 is turned off, to achieve isolation between the resonant module 210 and the second output voltage. Even though the resonant module 210 is still not turned off, seamless switching from the resonant voltage to the voltage output at the second terminal of the first switching module 310 has been achieved. Similarly, the second isolation circuit 400 can also achieve isolation between the differential reference module and the second output voltage, while also achieving seamless switching from the differential reference voltage to the voltage output at the second terminal of the first switching module 310. Finally, seamless switching from the first output voltage to the second output voltage is achieved.

In the embodiment, the control circuit 500 includes a control unit and at least one optocoupler. The control unit is connected to the high voltage circuit 300 and the low voltage circuit 200 through the at least one optocoupler, respectively, for controlling the generation of the second output voltage and the first output voltage. Specifically, the control unit is respectively connected to the gates of MOS transistors in high voltage circuit 300 and low voltage circuit 200 through the at least one optocoupler, to control the turning on/off of each MOS transistor in high voltage circuit 300 and low voltage circuit 200. The control unit can be a microcontroller or a microprocessor.

In another embodiment, unlike this embodiment, the isolation circuit 400 includes an isolation switch, the isolation switch can be a traditional high voltage relay or a high voltage switching switch. The controlled terminal of the isolation switch is connected to the control circuit 500, the first conducting terminal of the isolation switch is connected to the low voltage circuit 200, and the second conducting terminal of the isolation switch is connected to the high voltage circuit 300. The isolation switch can achieve the turning on/off of the low voltage circuit 200 and the high voltage circuit 300 under the controlling of the control circuit 500. For example, the control circuit can simultaneously turn off the isolation switch when the high voltage circuit 300 outputs the second output voltage to protect the low voltage circuit 200, which will not be described in detail.

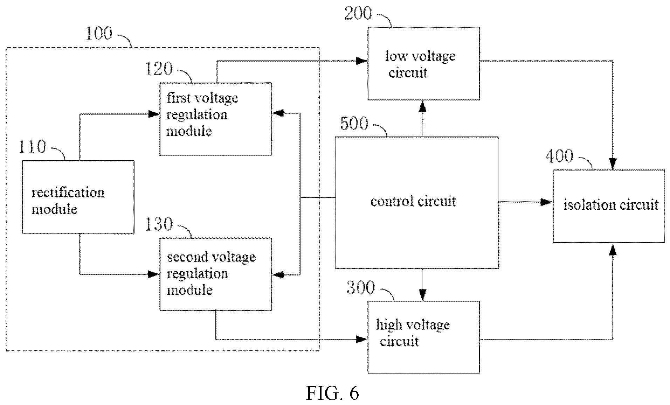

As shown in FIG. 6, in the embodiment, the input circuit 100 includes a rectification module 110 and a first voltage regulation module 120 and a second voltage regulation module 130 connected to the rectification module 110. The rectification module 110 is configured to rectify the input voltage into the input DC voltage, the first voltage regulation module 120 is configured to convert the input DC voltage into the first working voltage, and the second voltage regulation module 130 is configured to convert the input DC voltage into the second working voltage. The rectification module 110 can be a switching power supply topology module, the first voltage regulation module 120 can be a boost/buck topology module, and the second voltage regulation module 130 can be a flyback boost module.

As shown in FIG. 6, in the embodiment, the control unit is further connected to the first voltage regulation module 120, the second voltage regulation module 130, and the isolation circuit 400, respectively. The control unit is configured to configure the first working voltage, the second working voltage, and the preset isolation voltage.

In accordance to a second embodiment of the present application, a power supply device is provided, which includes the power supply circuit as described above. The power supply device can be an electric energy driving device, specifically a medical equipment driving device. The embodiment does not limit the types of power supply devices.

Those skilled in the art can clearly understand that, for the convenience and conciseness of description, only the division of various functional units and modules mentioned above is given as an example. In practical applications, the above functions can be assigned to different functional units and modules according to needs, that is, the internal structure of the device can be divided into different functional units or modules to complete all or part of the functions described above. The various functional units and modules in the implementation example can be integrated into one processing unit, or they can exist separately physically, or two or more units can be integrated into one unit. The integrated units mentioned above can be implemented in the form of hardware or software functional units. In addition, the specific names of each functional unit and module are only for the purpose of distinguishing them from each other and are not used to limit the scope of protection of the present application. The specific working process of the units and modules in the above system can refer to the corresponding process in the aforementioned method implementation examples, which will not be repeated here.

In the above embodiments, the descriptions of each embodiment have their own emphasis. For parts that are not detailed or recorded in one embodiment, please refer to the relevant descriptions of other embodiments.

The above embodiments are only used to illustrate the technical solution of the present application, and not to limit the present application; although the present application has been described in detail with reference to the aforementioned embodiments, those skilled in the art should understand that they can still modify the technical solutions recorded in the aforementioned embodiments, or equivalently replace some of the technical features therein; and these modifications or replacements do not separate the essence of the corresponding technical solutions from the scope of the technical solutions in each embodiment of the present application, and should be included in the scope of protection of the present application.

## Claims

1. A power supply circuit, comprising:
an input circuit, configured to modulate an input voltage into a first working voltage and a second working voltage, and output the first working voltage and the second working voltage;
a low voltage circuit, connected to the input circuit, and configured to generate a first output voltage based on the first working voltage and output the first output voltage;
a high voltage circuit, connected to the input circuit, and configured to generate a second output voltage based on the second working voltage and output the second output voltage;
an isolation circuit, connected to the high voltage circuit and the low voltage circuit, and configured to output the first output voltage, and configured to isolate the low voltage circuit from the second output voltage higher than a preset isolation voltage according to the preset isolation voltage when the high voltage circuit outputs the second output voltage; and
a control circuit, connected to the high voltage circuit and the low voltage circuit, and configured to respectively control the high voltage circuit and the low voltage circuit to generate the second output voltage and the first output voltage.

2. The power supply circuit according to claim 1, wherein the low voltage circuit comprises a resonant module, and the resonant module comprises a first switching transistor, a second switching transistor, and a resonant unit; a first conducting terminal of the first switching transistor is connected to the input circuit to receive the first working voltage, a controlled terminal of the first switching transistor is connected to the control circuit, a second conducting terminal of the first switching transistor is connected to a first conducting terminal of the second switching transistor and connected to the resonant module, a controlled terminal of the second switching transistor is connected to the control circuit, and a second conducting terminal of the second switching transistor is connected to a ground terminal; and
an output terminal of the resonant unit is connected to the isolation circuit and configured to output a resonant voltage.

3. The power supply circuit according to claim 2, wherein the low voltage circuit further comprises a reference voltage module, and the reference voltage module comprises a third switching transistor and a fourth switching transistor; a first conducting terminal of the third switching transistor is connected to the input circuit to receive the first working voltage, a controlled terminal of the third switching transistor is connected to the control circuit, a second conducting terminal of the third switching transistor is connected to a first conducting terminal of the fourth switching transistor and connected to the isolation circuit, a controlled terminal of the fourth switching transistor is connected to the control circuit, and a second conducting terminal of the fourth switching transistor is connected to the ground terminal; and
the reference voltage module is configured to output a differential mode reference voltage, the differential mode reference voltage is configured to be combined with the resonant voltage to generate a differential mode sine voltage, and the differential mode sine voltage is the first output voltage.

4. The power supply circuit according to claim 3, wherein the first switching transistor, the second switching transistor, the third switching transistor, and the fourth switching transistor are all MOS transistors.

5. The power supply circuit according to claim 4, wherein the first switching transistor, the second switching transistor, the third switching transistor, and the fourth switching transistor are all NMOS transistors.

6. The power supply circuit according to claim 1, wherein the high voltage circuit comprises a first switching module, a second switching module, a third switching module, and a fourth switching module;
a first terminal of the first switching module is connected to the input circuit to receive the second working voltage, a second terminal of the first switching module is connected to a first terminal of the second switching module and connected to the isolation circuit, and a second terminal of the second switching module is connected to the ground terminal; a first terminal of the third switching module is connected to the input circuit to receive the second working voltage, a second terminal of the third switching module is connected to a first terminal of the fourth switching module and connected to the isolation circuit, and a second terminal of the fourth switching module is connected to the ground terminal; and
the high voltage circuit is configured to output a differential mode square wave voltage, and the differential mode square wave voltage is the second output voltage.

7. The power supply circuit according to claim 6, wherein the first switching module, the second switching module, the third switching module, and the fourth switching module are all MOS transistors.

8. The power supply circuit according to claim 7, wherein the first switching module, the second switching module, the third switching module, and the fourth switching module are all NMOS transistors.

9. The power supply circuit according to claim 3, wherein the isolation circuit comprises a first isolation module and a second isolation module; a voltage input terminal of the first isolation module is connected to the resonant module, a voltage input terminal of the second isolation module is connected to the reference voltage module, and both the voltage output terminal of the first isolation module and the voltage output terminal of the second isolation module are connected to the high voltage circuit.

10. The power supply circuit according to claim 9, wherein the first isolation module comprises a first divider resistor, a second divider resistor, a first unidirectional conductor, a second unidirectional conductor, a third unidirectional conductor, and a fourth unidirectional conductor;
a first terminal of the first divider resistor is connected to a protective voltage terminal, the protective voltage terminal is configured to output a protective voltage corresponding to the preset isolation voltage, a second terminal of the first divider resistor is respectively connected to a positive pole of the first unidirectional conductor and a positive pole of the third unidirectional conductor, a negative pole of the first unidirectional conductor is connected to a positive pole of the second unidirectional conductor and connected to the resonant module, a negative pole of the second unidirectional conductor is connected to a first terminal of the second divider resistor, a negative pole of the third unidirectional conductor is connected to a positive pole of the fourth unidirectional conductor and connected to the high voltage circuit, a negative pole of the fourth unidirectional conductor is connected to a first terminal of the second divider resistor, and a second terminal of the second divider resistor is connected to the ground terminal; and
a structure of the second isolation module is the same as that of the first isolation module; the first isolation module is configured to output the resonant voltage and isolate the resonant module from the high voltage circuit, and the second isolation module is configured to output the differential mode reference voltage and isolate the reference voltage module from the high voltage circuit.

11. The power supply circuit according to claim 1, wherein the control circuit comprises a control unit and at least one optocoupler, the control unit is connected to the high voltage circuit and the low voltage circuit respectively through the at least one optocoupler, to control to generate the second output voltage and the first output voltage.

12. The power supply circuit according to claim 11, wherein the input circuit comprises a rectification module, and a first voltage regulation module connected to the rectification module, and a second voltage regulation module connected to the rectification module; the rectification module is configured to rectify the input voltage into an input direct current voltage, the first voltage regulation module is configured to convert the input direct current voltage into the first working voltage, and the second voltage regulation module is configured to convert the input direct current voltage into the second working voltage.

13. The power supply circuit according to claim 12, wherein the control unit is respectively connected to the first voltage regulation module, the second voltage regulation module, and the isolation circuit, and the control unit is configured to configure the first working voltage, the second working voltage, and the preset isolation voltage.

14. The power supply circuit according to any one of claims 1-13, wherein the first output voltage is less than the second output voltage.

15. A power supply device, comprising the power supply circuit according to any one of claims 1-14.
